# EUROPÄISCHE PATENTSCHRIFT

(11) **EP 0 881 707 B1**
(45) Veröffentlichungstag und Bekanntmachung des Hinweises auf die Patenterteilung: **28.04.2004**
(21) Anmeldenummer: 98109625.8
(22) Anmeldetag: 27.05.1998
(51) Int. Cl.: H01R 3/00, B60Q 1/14

(54) **Elektrischer Schalter**
Electric switch
Commutateur électrique

(30) Priorität: 30.05.1997 DE 19722611
(43) Veröffentlichungstag der Anmeldung: 02.12.1998
(73) Patentinhaber: Leopold Kostal GmbH & Co. KG, 58507 Lüdenscheid (DE)
(72) Erfinder: Hirschfeld, Klaus, 58511 Lüdenscheid (DE)

(56) Entgegenhaltungen:
- EP-B- 0 446 126
- DE-C- 3 834 390

## Beschreibung

Die vorliegende Erfindung geht von einem gemäß dem Oberbegriff des Hauptanspruches konzipierten elektrischen Schalter aus.

An derartige elektrische Schalter werden vielfältige Funktionsanforderungen gestellt. So sollen diese Schalter bei kompaktem Bauraum über vielfältige Verstellmöglichkeiten verfügen. Die Betätigungsglieder solcher Schalter müssen dabei auf einfache, aber eindeutige Art und Weise bedient werden können. So ist es dem Benutzer möglich, durch das Ein-, Aus- und Umschalten der angeschlossenen elektrischen Stromkreise eine Vielzahl von Funktionen auf komfortable Art und Weise zu beeinflussen. Oftmals werden über solche elektrische Schalter die verschiedenen Funktionen der Beleuchtungsanlage eines Kraftfahrzeuges ein- bzw. ausgeschaltet.

Durch die EP 0 446 126 B1 ist ein dem Oberbegriff des Hauptanspruches entsprechender elektrischer Schalter bekanntgeworden. Dieser elektrische Schalter ist als Schaltkopf des Schalthebels eines Lenkstockschalters ausgebildet und zur Beeinflussung der Funktionen der Beleuchtungsanlage eines Kraftfahrzeuges vorgesehen. Der als Schaltkopf ausgebildete Schalter weist zwei ringförmige Betätigungsglieder auf, welche jeweils um die Gehäuselängsachse drehbeweglich in mehrere Positionen verstellbar sind. Eines der beiden Betätigungsglieder kann dabei unabhängig von der Position des anderen, jedoch das andere der Betätigungsglieder nur in Abhängigkeit der Position des einen Betätigungsgliedes verstellt werden. D.h., die Verstellmöglichkeiten sind entweder gesperrt oder aber freigegeben. Dies ist der Fall, um das Einschalten von unzulässigen Funktionskombinationen der Beleuchtungsanlage wirkungsvoll zu verhindern. Außerdem besteht aus dem gleichen Grunde eine Funktionskoppelung der beiden Betätigungsglieder, d.h. aus bestimmten Positionen wird bei Verstellung des einen Betätigungsgliedes automatisch das andere Betätigungsglied mitverstellt. Zur Realisierung der Verstellsperrung bzw. Funktionskopplung weist der bekannte elektrische Schalter einem im Gehäusekörper drehbeweglich gehaltenen parallel zur Gehäuselängsachse verschiebbaren, unter Federwirkung stehenden Kooperationsfinger auf. Wegen seiner einseitigen, parallel zur Gehäuselängsachse ausgerichteten Wirkungsweise erzeugt dieser Kooperationsfinger jedoch eine ungünstige Kraftwirkung, was im Laufe der Zeit zu Fehlausrichtungen der Betätigungsglieder und damit zu Funktionsbeeinträchtigungen des elektrischen Schalters führen kann. Außerdem ist bei einem solchermaßen ausgebildeten elektrischen Schalter die Montage vergleichsweise aufwendig.

Außerdem ist durch die DE 38 34 390 C1 eine Steuereinrichtung für einen elektrischen Schalter bekanntgeworden, durch die das Betätigungsglied des elektrischen Schalters nur in zulässige Schaltpositionen gebracht werden kann. Das Einschalten von unzulässigen Funktionskombinationen ist durch diese Steuereinrichtung wirkungsvoll verhindert. Die Steuereinrichtung ist für einen elektrischen Schalter vorgesehen, dessen Betätigungsglied durch eine kombinierte Dreh- und Zugbewegung bzw. Dreh- und Schubbewegung in mehrere Positionen verstellt werden kann. Dabei ist der elektrische Schalter sowohl in mehrere Dreh- als auch in mehrere Zug- bzw. Schubpositionen verstellbar, um die unterschiedlichen Funktionen der Beleuchtungsanlage eines Kraftfahrzeuges beeinflussen zu können. Durch die Drehpositionen wird dabei die Stand- und Fahrlichtfunktion und durch die Zug- bzw. Schubpositionen die Nebellicht- und Nebelschlußlichtfunktion beeinflußt.

Um unzulässige Funktionskombinationen wirkungsvoll zu verhindern, greifen zwei um 180° versetzt zueinander angeordnete, radial zur Drehachse ausgerichtete Steuerglieder in jeweils eine am Gehäuse vorhandene Steuerkulisse ein. Die Ausbildung der Steuerkulisse mit ihren Steuerbahnen führt zur Funktionskoppelung der beiden Bewegungen, so daß bestimmte Schaltpositionskombinationen gesperrt sind bzw. aus bestimmten Schaltpositionskombinationen bei Verstellung des Betätigungsgliedes in eine seiner Betätigungsrichtungen automatisch auch eine Verstellung in eine andere Betätigungsrichtung erfolgt. Durch die symmetrische Anordnung der beiden federbelasteten Steuerglieder ergibt sich eine günstige - in radialer Richtung wirkende - Kraft, so daß in allen Positionen eine Fehlausrichtung des Betätigungsgliedes wirkungsvoll verhindert ist.
Der vorliegenden Erfindung liegt die Aufgabe zugrunde, einen elektrischen Schalter mit zwei drehbar zu verstellenden Betätigungsgliedem so weiterzubilden, daß bei einfacher und kostengünstiger Montage der einzelnen Funktionsteile, der Sperrkörper nur in radialer Richtung wirkende Kräfte lediglich geringer Größenordnung erzeugt, so daß über die gesamte Lebensdauer des elektrischen Schalters eine exakte Ausrichtung der Betätigungsglieder gewährleistet ist.

Bei einem solchermaßen ausgebildeten elektrischen Schalter ist besonders vorteilhaft, daß durch die geschickte Anordnung und Zuordnung der einzelnen Funktionsteile der beim Betätigen der Betätigungsglieder zwangsläufig entstehende Verschleiß besonders gering gehalten ist. Dabei spielt eine wesentliche Rolle, daß der unter Federwirkung stehende Sperrkörper beim Verstellen der Betätigungsglieder nicht mitverstellt wird, sondern an einem ortsfesten Gehäuseteil angeordnet ist. Außerdem ermöglicht ein derart aufgebauter elektrischer Schalter die Möglichkeit, auf einfache Art und Weise Änderungen bzgl. der Positionierung und der Anzahl der Funktionsansätze, Sperrnocken und Mitnahmenocken vorzunehmen. Somit ist es möglich, die unterschiedlichen Funktionsabläufe einer Vielzahl von Schaltervarianten ohne großen Aufwand zu realisieren.

Weitere vorteilhafte Ausgestaltungen des erfindungsgemäßen Gegenstandes sind in den Unteransprüchen angegeben.

Anhand zweier in den Zeichnungen dargestellter Ausführungsbeispielen sei der erfindungsgemäßen Gegenstand näher erläutert und zwar zeigen
- Fig. 1: einen elektrischen Schalter prinziphaft in Explosionsdarstellung
- Fig. 2: einen Längsschnitt durch einen elektrischen Schalter
- Fig. 3: einen als Blattfeder ausgebildeten Sperrkörper in vergrößerter Darstellung
- Fig. 4 - 9: Schnitte entsprechend der Linie A-A gemäß Fig. 2, wobei jeder Schnitt eine spezielle Schaltposition bzw. Schaltstellung der beiden Betätigungsglieder wiedergibt
- Fig. 10: einen als Sperrklinke ausgebildeten Sperrkörper.

Wie aus den Figuren hervorgeht, besteht ein solcher elektrischer Schalter neben den der Einfachheit halber nicht dargestellten elektrischen Kontaktteilen, im wesentlichen aus einem Gehäuse 1, einem am Gehäuse 1 gelagerten, drehbar in mehrere Schaltpositionen bringbaren ersten Betätigungsglied 2 und einem ebenfalls am Gehäuse 1 gelagerten, drehbar in mehrere Schaltstellungen bringbaren zweiten Betätigungsglied 3.

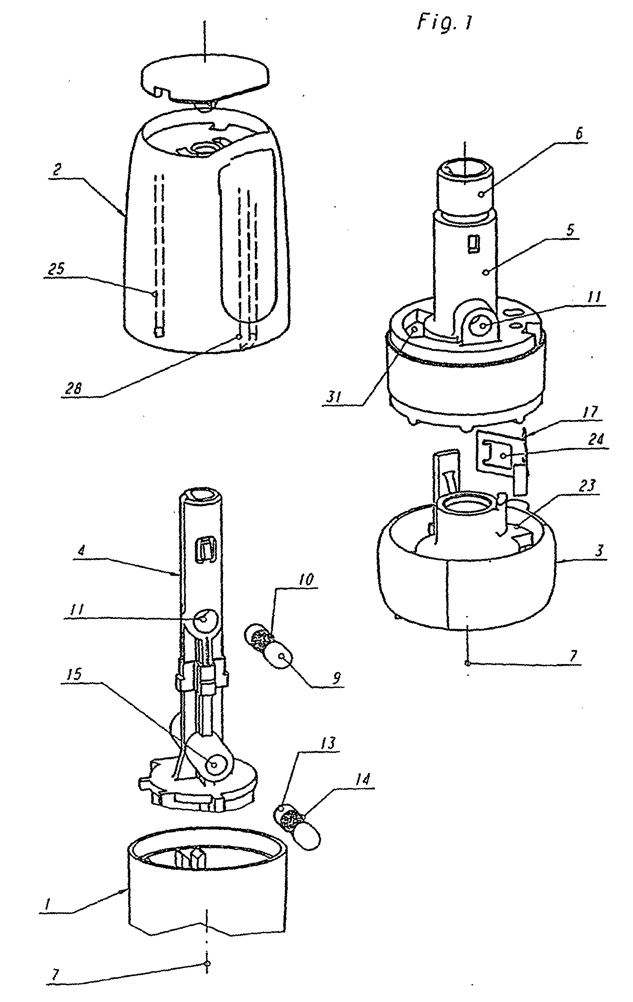

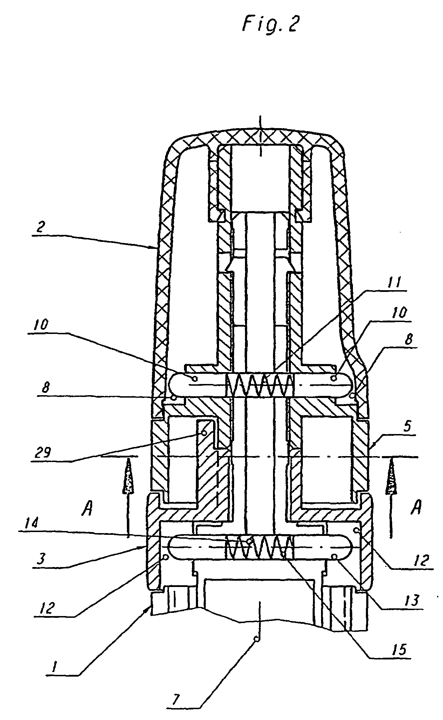

Wie insbesondere aus Fig. 1 und Fig. 2 hervorgeht, ist am Gehäuse 1 ortsfest ein Aufnahmekörper 4 angebracht. Der funktionell zum Gehäuse 1 gehörige Aufnahmekörper 4 ist im wesentlichen zapfenartig ausgebildet und nimmt an seinem dem freien Ende abgewandten unteren Bereich das zweite Betätigungsglied 3 drehverstellbar auf. Der mittlere Bereich des Aufnahmekörpers 4 ist zur ortsfesten Halterung eines zwischen dem ersten und dem zweiten Betätigungsglied 2,3 plazierten, ebenfalls funktionell zum Gehäuse 1 gehörigen Trennring 5 vorgesehen. Der Trennring 5 weist einen zapfenförmigen Ansatz 6 auf, der als Lager für das durch Drehung verstellbare erste Betätigungsglied 2 dient. Über verschiedene Halteund Führungselemente ist eine funktionsgerechte und positionsgenaue Zuordnung von Gehäuse 1 und den beiden Betätigungsgliedem 2,3 gewährleistet.

Zur Sicherstellung von drei verschiedenen Schaltpositionen sind in die die Gehäuselängsachse 7 konzentrisch umgebende Innenfläche des ersten Betätigungsgliedes 2 zwei Rastkurven 8 eingeformt. Die beiden Rastkurven 8 sind um 180° versetzt zueinander angeordnet und in jede der beiden Rastkurven 8 greift ein Rastelement 9 ein. Zwischen den beiden Rastelementen 9 ist zur Erzeugung der Rastwirkung eine Schraubendruckfeder 10 angeordnet. Zur verschieblichen Aufnahme sind die beiden Rastelemente 9, sowie die Schraubendruckfeder 10 in einem teilweise im Aufnahmekörper 4 und teilweise im Ansatz 6 des Trennringes 5 vorhandenen, quer zur Gehäuselängsachse 7 verlaufenden Aufnahmetunnel 11 untergebracht. Zur Sicherstellung von ebenfalls drei verschiedenen Schaltstellungen sind in die die Gehäuselängsachse 7 konzentrisch umgebende Innenfläche des zweiten Betätigungsgliedes 3 zwei weitere Rastkurven 12 eingeformt. Die beiden weiteren Rastkurven 12 sind um 180° versetzt zueinander angeordnet und in jede der beiden weiteren Rastkurven 12 greift ein weiteres Rastelement 13 ein. Zwischen den beiden weiteren Rastelementen 13 ist zur Erzeugung der Rastwirkung eine weitere Schraubendruckfeder 14 angeordnet. Zur verschieblichen Aufnahme sind die beiden weiteren Rastelemente 13, sowie die weitere Schraubendruckfeder 14 in einem im Aufnahmekörper 4 vorhandenen, quer zur Gehäuselängsachse 7 verlaufenden weiteren Aufnahmetunnel 15 untergebracht. Die beiden Betätigungsglieder 2,3 können somit auf einfache Art und Weise bedient werden, wobei dem Benutzer durch die deutlich spürbare Rastung eindeutig zu erkennen gegeben wird, daß das verstellte Betätigungsglied 2,3 eine definierte Schaltposition bzw. Schaltstellung eingenommen hat.

In den dem Ansatz 6 abgewandten Sockel, ortsfest am Gehäuse 1 angebrachten Trennringes 5 ist eine Aufnahmetasche 16 eingeformt, die zur Festlegung des als Blattfeder ausgebildeten Sperrkörpers 17 dient. Somit kann der Sperrkörper 17 auf besonders einfache Art und Weise positionsgenau montiert werden.

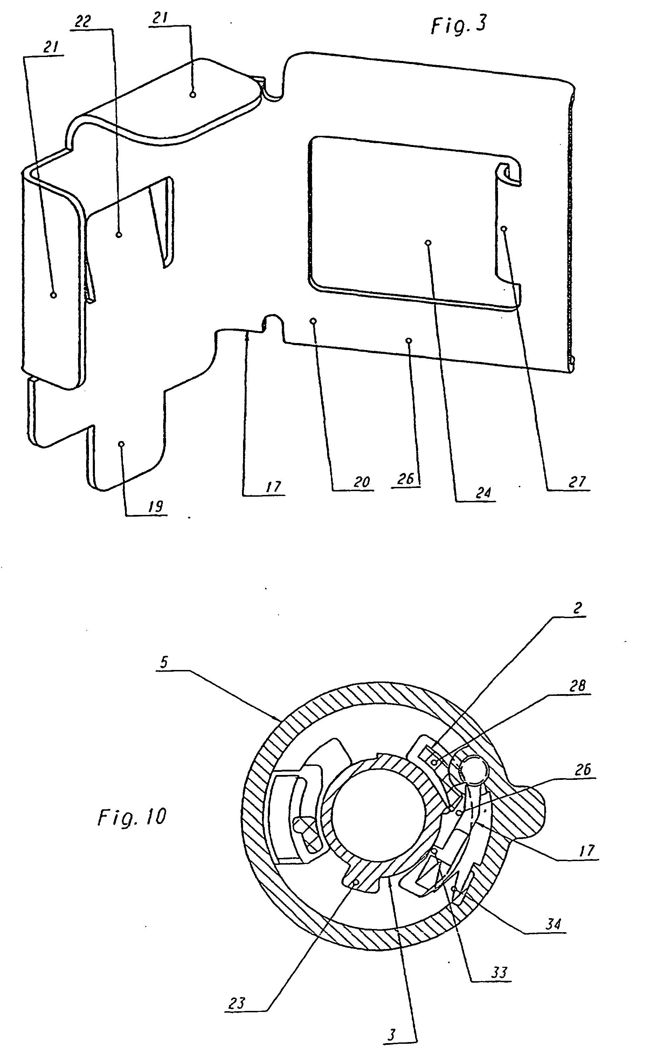

Wie insbesondere aus den Figuren 3 bis 9 hervorgeht, weist der in der Aufnahmetasche 16 festgelegte, als Blattfeder ausgebildete Sperrkörper 17 zwei Schenkel 19,20 auf. Der eine Schenkel 19 ist einstückig mit Führungs- bzw. Halteelementen 21 und einer Rastzunge 22 versehen und wird zur formschlüssigen Aufnahme einfach in die Aufnahmetasche 16 eingeschoben und dabei rastend festgelegt. Der andere Schenkel 20 ist um einen Winkel von etwa 80° in Richtung auf die Gehäuselängsachse 7 aus der Erstreckungsebene des einen Schenkel 19 abgewinkelt. Zur Kooperation mit einem an das zweite Betätigungsglied 3 angeformten Spermocken 23 weist der andere Schenkel 20 ein Sperrfenster 24 auf. Um außerdem mit einem an das erste Betätigungsglied 2 angeformten zweiten Funktionsansatz 28 in Wirkverbindung kommen zu können, stellt einer der Sperrfensterränder eine Betätigungsfläche 26 dar. Bei Wirkverbindung wird der Sperrkörper 17 durch den zweiten Funktionsansatz 28 radial nach außen verstellt, womit die Sperrwirkung des Sperrkörpers 17 aufgehoben ist. Um dabei eine Verhakung mit dem Sperrnocken 23 zu vermeiden, weist das Sperrfenster 24 eine in Richtung der Außenwandung des Gehäuses 1 umgebogene, mit einem Anlageradius versehene Sperrlasche 27 auf.

Wie weiterhin insbesondere aus den Figuren 1 und 4-9 hervorgeht, ist an das erste Betätigungsglied 2 zusätzlich ein erster Funktionsansatz 25 angeformt. Dieser erste Funktionsansatz 25 dient zur automatischen Rückführung des zweiten Betätigungsgliedes 3 aus seiner Schaltstellung II in seine Schaltstellung I. Zu diesem Zweck kommt der erste Funktionsansatz 25 bei Rückdrehung des ersten Betätigungsgliedes 2 aus seiner Schaltposition II bzw. Schaltposition I in seine Schaltposition 0 mitnehmend an einem an das zweite Betätigungsglied 3 angeformte Mitnahmenocken 29 in Wirkverbindung.

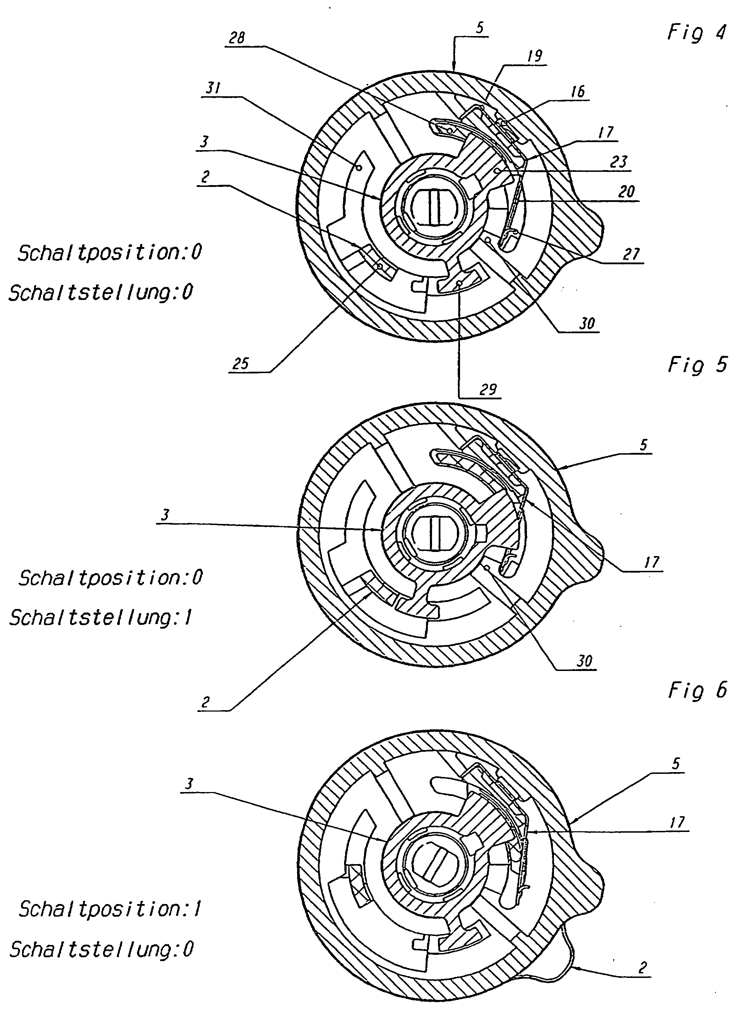

Anhand der Figuren 4 bis 9 werden die verschiedenen Schaltpositionen, Schaltstellungen und Schaltkombinationen der beiden Betätigungsglieder 2,3 des elektrischen Schalters näher erläutert. Mit dem elektrischen Schalter können beispielsweise verschiedene Funktionen der Beleuchtungsanlage (Licht, Nebellicht) eines Kraftfahrzeuges beeinflußt. Die Abbildung der Fig. 4 zeigt beide Betätigungsglieder 2,3 des elektrischen Schalters jeweils in ihrer Schaltposition 0 bzw. Schaltstellung 0, d.h. weder eine der Lichtfunktionen (Standlicht, Fahrlicht), noch eine der Nebellichtfunktionen (Nebellicht, Nebelschlußlicht) befindet sich im eingeschalteten Zustand. Der Sperrkörper 17 liegt bei dieser Schaltkombination mit seinem freien Ende seines anderen Schenkels 20 unter Vorspannung auf einem am Trennring 5 vorhandenen Anschlag 30 auf. Ausgehend von der in Fig. 4 dargestellten Schaltkombination der beiden Betätigungsglieder 2,3 kann das erste Betätigungsglied 2 durch Verdrehung im Uhrzeigersinne ohne weiteres in seine Schaltposition I (Standlichtfunktion ist eingeschaltet) und seine Schaltposition II (Fahrlichtfunktion ist eingeschaltet) gebracht werden. Das gleiche gilt umgekehrt für eine Rückstellung des ersten Betätigungsgliedes 2 entgegen des Uhrzeigersinnes, ausgehend von seiner Schaltposition II in die Schaltposition 0. Eine Sperrung von Schaltpositionen erfolgt nicht, weil der an das erste Betätigungsglied 2 angeformte zweite Funktionsansatz 28 den Sperrkörper 17 über seine Betätigungsfläche 26 entgegen der Vorspannung radial nach außen verstellt. Außerdem geht insbesondere aus den Fig. 4 bis 9 hervor, daß der erste Funktionsansatz 25 in einer kreisbogenförmig ausgebildeten ersten Führungsbahn 31 und der zweiten Führungsansatz 28 in einer kreisbogenförmig ausgebildeten zweiten Führungsbahn 32 begrenzt bewegbar gehalten sind. Die erste und die zweite Führungsbahn 31,32 sind jeweils in den Sockel des Trennringes 5 eingeformt.

Der vorstehend beschriebene Funktionsablauf des ersten Betätigungsgliedes 2 stellt sich ebenfalls ein, befindet sich das zweite Betätigungsglied 3 - wie in Fig. 5 gezeigt - in seiner Schaltstellung I. Ungehindert kann das erste Betätigungsglied 2 in seine verschiedenen Schaltpositionen 0,I,II gebracht werden.

Befindet sich das erste Betätigungsglied 2 jedoch in seiner Schaltposition 0, so kann das zweite Betätigungsglied 3 nur in seine Schaltstellung I (Nebellicht ist eingeschaltet), aber nicht in seine Schaltstellung II (Nebellicht und Nebelschlußlicht sind eingeschaltet) gebracht werden, weil der Sperrkörper 17 die weitere Verstellung des zweiten Betätigungsgliedes 3 wirkungsvoll sperrt. Wie insbesondere der Fig. 5 in diesem Zusammenhang weiterhin zu entnehmen ist, liegt der Sperrnocken 23 im Sperrfenster 24 des Sperrkörpers 17 und kommt sperrend an der Sperrlasche 27 zur Anlage. Das zweite Betätigungsglied 3 kann also aus seiner Schaltstellung I lediglich in seine Schaltstellung 0 zurückgestellt werden.

Erst wenn das erste Betätigungsglied 2 seine Schaltposition I eingenommen hat, kann eine Verstellung des zweiten Betätigungsgliedes 3 in seine Schaltstellung II erfolgen, weil - wie insbesondere aus Fig. 6 bis 9 hervorgeht - die Sperrwirkung des Sperrkörpers 17 aufgehoben ist Das ist der Fall, weil der erste Funktionsansatz 25 bei Verstellung des ersten Betätigungsgliedes 2 in seine Schaltposition I den Sperrkörper 17 radial nach außen verstellt Wird das erste Betätigungsglied 2, ausgehend von seiner Schaltposition 0 in die Schaltposition I gebracht, so kommt der erste Funktionsansatz 25 an der Betätigungsfläche 26 des anderen Schenkels 20 zur Anlage und verstellt diesen dadurch, entgegen seiner Vorspannung, mehr und mehr nach außen. Somit ist letztendlich eine freie Verstellung des zweiten Betätigungsgliedes 3 möglich, weil eine Sperrung durch den Sperrkörper 17 nicht mehr erfolgt D.h. ausgehend von seiner Schaltstellung 0 kann das zweite Betätigungsglied 3 ohne weiteres in seine Schaltstellung I und II gebracht werden. Der vorstehend beschriebene Funktionsablauf des zweiten Betätigungsgliedes 3 kann ebenso erfolgen, befindet sich das erste Betätigungsglied 2 in seiner Schaltposition II. In umgekehrter Reihenfolge kann dieser Funktionsablauf ebenfalls ungehindert erfolgen, wenn das zweite Betätigungsglied 3 ausgehend von seiner Schaltstellung II in seine Schaltstellung I oder 0 zurückgebracht werden soll und sich das erste Betätigungsglied 2 entweder in seiner Schaltposition I oder II befindet.

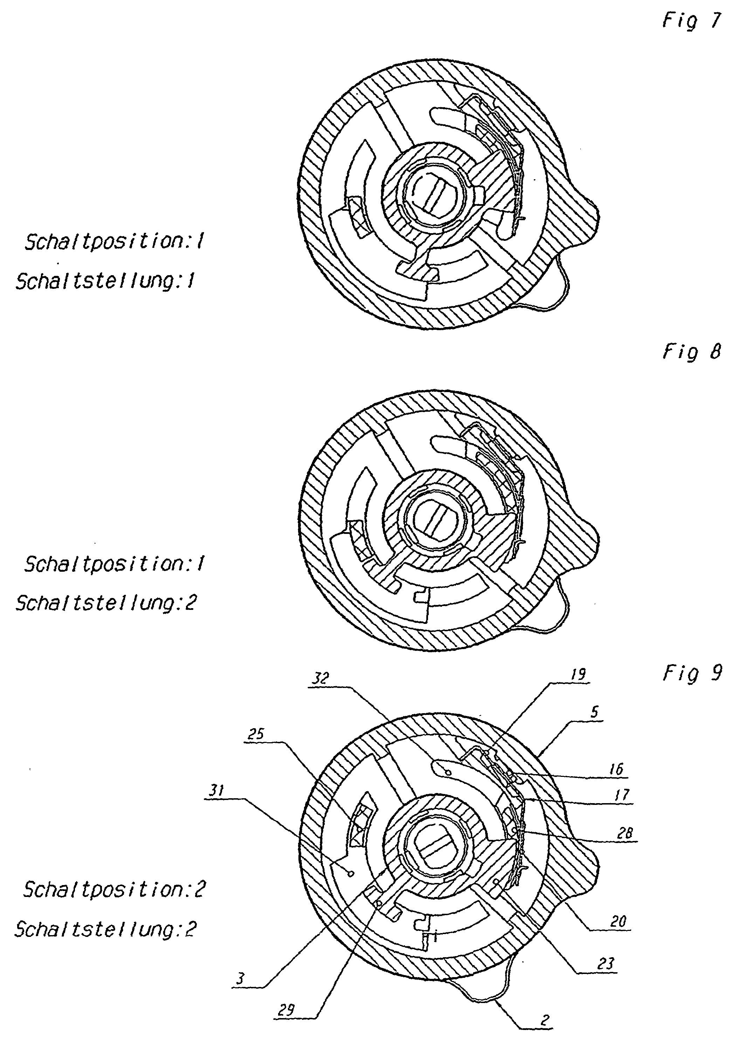

Befindet sich - wie insbesondere aus Fig. 9 hervorgeht - sowohl das erste Betätigungsglied 2 in seiner Schaltposition II, als auch das zweite Betätigungsglied 3 in seiner Schaltstellung II, sind die Funktionen Fahrlicht, Nebellicht und Nebelschlußlicht in Kombination eingeschaltet. Ausgehend von seiner Schaltstellung II kann das zweite Betätigungsglied 3 - wie bereits vorstehend beschrieben - ohne weiteres in seine Schaltstellung I bzw. 0 zurückgeführt werden. D.h. die Rückführung in diese Schaltstellungen ist weder gesperrt, noch wird das erste Betätigungsglied 2 bei der Rückführung des zweiten Betätigungsgliedes 3 beeinflußt. Auch das erste Betätigungsglied 2 kann, wie insbesondere aus Fig. 8 hervorgeht, ohne weiteres in seine Schaltstellung I zurückgeführt werden. Befindet sich jedoch das zweite Betätigungsglied 3 in seiner Schaltstellung II und wird dann das erste Betätigungsglied 2 ausgehend von seiner Schaltposition I - wie aus Fig. 8 hervorgeht - in seine Schaltposition 0 zurückgebracht, so kommt der an das erste Betätigungsglied 2 angeformte erste Funktionsansatz 25 mit dem an das zweite Betätigungsglied 3 angeformten Mitnahmenocken 29 in Wirkverbindung. Durch die Wirkverbindung des ersten Funktionsansatzes 25 und mit dem Mitnahmenocken 29 wird dann das zweite Betätigungsglied 3 automatisch durch die Rückführung des ersten Betätigungsgliedes 2 in seine Schaltposition 0 wie insbesondere aus Fig. 5 hervorgeht - in seine Schaltstellung I zurückgestellt Unzulässige Schaltkombinationen der beiden Betätigungsglieder 2,3 sind somit auf einfache Art und Weise wirkungsvoll verhindert.

Um bei anderen Funktionsabläufe notwendig machenden Schaltervarianten eine Sperrung anderer Schaltkombinationen bzw. anderer automatischer Mitnahmeeffekte zu erreichen, ist es selbstverständlich möglich, beispielsweise mehrere Sperrnocken 23 oder einen Sperrnocken 23 an anderer Position an das zweite Betätigungsglied 3 anzuformen. Gleiches ist auch erreichbar, wenn beispielsweise der erste und/oder zweite Funktionsansatz 25,28 des ersten Betätigungsgliedes 2 und/oder der Mitnahmenocken 29 des zweiten Betätigungsgliedes 3 an anderer Position angeformt wird. Auf einfache Art und Weise kann somit die Sperrung bestimmter Schaltkombinationen bzw. die automatische Mitverstellung variiert werden, um eine Vielzahl von unterschiedliche Funktionsabläufe aufweisende Schaltervarianten realisieren zu können.

Wie insbesondere aus Fig. 10 hervorgeht, ist der Sperrkörper 17 als Sperrklinke ausgebildet und am funktional zum Gehäuse 1 gehörigen Trennring 5 schwenkbar gelagert. An seiner, der Gehäuselängsachse 7 zugewandten Oberfläche, ist die Sperrklinke mit einem eingeformten Sperrprofil 33 versehen. Das Sperrprofil 33 kommt zur Sperrung der Betätigungsmöglichkeit mit einem an das zweite Betätigungsglied 3 angeformten Sperrnocken 23 in Wirkverbindung. Ein Betätigen des zweiten Betätigungsgliedes 3 in Richtung des Uhrzeigersinnes ist dann nicht mehr möglich. Zur Aufhebung der Sperrwirkung kommt durch die Betätigung des ersten Betätigungsgliedes 2 ein an dieses angeformter zweiter Funktionsansatz 28 mit einer an die Sperrklinke angeformten Betätigungsfläche 26 in Wirkverbindung. Durch den zweiten Funktionsansatz wird die Sperrklinke entgegen der Federwirkung eines als Schraubendruckfeder ausgebildeten Federelementes 34 radial nach außen verschwenkt. Das als Schraubendruckfeder ausgebildete Federelement 34 ist zur sicheren Halterung zwischen der dem Sperrprofil 33 gegenüberliegenden Außenfläche der Sperrklinke und dem entsprechenden Innenwandabschnitt des Trennringes 5 angeordnet.

## Patentansprüche

1. Elektrischer Schalter mit einem mechanische Funktionsteile und davon beeinflußte elektrische Kontaktteile aufweisenden Gehäuse, an welchem ein um die Gehäuselängsachse drehbares, in mehrere Schaltpositionen bringbares erstes Betätigungsglied und ein ebenfalls um die Gehäuselängsachse drehbares, auch in mehrere Schaltstellungen bringbares zweites Betätigungsglied gelagert sind, wobei die beiden Betätigungsglieder funktional einander derart zugeordnet sind, daß das zweite Betätigungsglied bei der Verstellung des ersten Betätigungsgliedes aus zumindest einer seiner Schaltpositionen automatisch in eine andere Schaltposition durch Kooperationsmittel überführt wird und das die Verstellmöglichkeiten des zweiten Betätigungsgliedes in Abhängigkeit der Schaltpositionen des ersten Betätigungsgliedes durch Kooperationsmittel freigegeben oder aber gesperrt sind, **dadurch gekennzeichnet, daß** einstückig an das erste Betätigungsglied (2) ein erster und ein zweiter Funktionsansatz (25,28) angeformt sind, die jeweils in einer die Gehäuselängsachse (7) partiell umgebenden, im Gehäuse (1) vorhandenen, kreisbogenförmig ausgebildeten Führungsbahn (31,32) bewegbar gehalten sind, daß der erste Funktionsansatz (25) mit einem an das zweite Betätigungsglied (3) angeformten Mitnahmenocken (29) in Wirkverbindung bringbar ist und daß am Gehäuse (1) ein unter Federwirkung stehender, radial auslenkbarer, mit zumindest einem an das zweite Betätigungsglied (3) angeformten Spermocken (23) in Wirkverbindung kommender Sperrkörper (17) angebracht ist, der durch den zweiten Funktionsansatz (28) eine radiale Auslenkung erfährt, so daß die Verstellmöglichkeiten des zweiten Betätigungsgliedes (3) entweder blockiert oder freigegeben sind.

2. Elektrischer Schalter nach Anspruch 1, **dadurch gekennzeichnet, daß** der Sperrkörper (17) als drehbeweglich am Gehäuse (1) gelagerte, an seiner der Gehäuselängsachse (7) zugewandten Oberfläche ein mit dem Spermocken (23) in Wirkverbindung kommendes Sperrprofil (33) und eine mit dem zweiten Funktionsansatz (28) in Wirkverbindung kommende Betätigungsfläche (26) aufweisende Sperrklinke ausgebildet ist.

3. Elektrischer Schalter nach Anspruch 2, **dadurch gekennzeichnet, daß** der als Sperrklinke ausgebildete Sperrkörper (17) einstückig an das Gehäuse (1) angeformt und die Lagerstelle der Sperrklinke als Filmscharnier ausgebildet ist.

4. Elektrischer Schalter nach einem der Ansprüche 1 bis 3, **dadurch gekennzeichnet, daß** an den Sperrkörper (17) einstückig ein die Federwirkung erzeugendes Federelement (34) angeformt ist.

5. Elektrischer Schalter nach einem der Ansprüche 1 bis 3, **dadurch gekennzeichnet, daß** zwischen dem Sperrkörper (17) und dem Gehäuse (1) ein die Federwirkung erzeugendes separates Federelement (34) angeordnet ist.

6. Elektrischer Schalter nach Anspruch 5, **dadurch gekennzeichnet, daß** das separate Federelement (34) als Schraubendruckfeder ausgebildet ist.

7. Elektrischer Schalter nach Anspruch 1, **dadurch gekennzeichnet, daß** der Sperrkörper (17) als eine aus Metall hergestellte, einerseits am Gehäuse (1) festgelegte und andererseits mit dem Sperrnocken (23) und mit dem zweiten Funktionsansatz (28) in Wirkverbindung kommende, die Federwirkung selbst erzeugende Blattfeder ausgebildet ist.

8. Elektrischer Schalter nach Anspruch 7, **dadurch gekennzeichnet, daß** der als Blattfeder ausgebildete Sperrkörper (17) zwei Schenkel (19,20) aufweist und daß der eine Schenkel (19) formschlüssig in einer Aufnahmetasche (16) des Gehäuses (1) festgelegt und daß der andere Schenkel (20) etwa um einen Winkel von 80° in Richtung auf die Gehäuselängsachse (7) aus der Erstreckungsebene des einen Schenkels (19) abgewinkelt ist und daß der andere Schenkel (20) ein mit dem Sperrnocken (23) in Wirkverbindung kommendes Sperrfenster (24) und eine mit dem zweiten Funktionsansatz (28) in Wirkverbindung kommende, einen Sperrfensterrand darstellende Betätigungsfläche (26) aufweist

9. Elektrischer Schalter nach einem der Ansprüche 1 bis 8, **dadurch gekennzeichnet, daß** die die Gehäuselängsachse (7) konzentrisch umgebende Innenfläche sowohl des ersten, als auch des zweiten Betätigungsgliedes (2,3) jeweils zumindest eine Rastkurve (8,12) aufweist, in die jeweils ein federbelastetes am Gehäuse (1) verschiebbar gehaltenes Rastelement (10,13) zur Sicherstellung der unterschiedlichen Schaltpositionen bzw. Schaltstellungen eingreift.

10. Elektrischer Schalter nach einem der Ansprüche 1 bis 9, **dadurch gekennzeichnet, daß** der elektrische Schalter Bestandteil einer in einem Kraftfahrzeug angeordneten Bedieneinheit ist.

11. Elektrischer Schalter nach Anspruch 10, **dadurch gekennzeichnet, daß** die Bedieneinheit als Lenkstockschalter ausgebildet und der elektrische Schalter am freien Endbereich des Betätigungshebels angeordnet ist.

12. Elektrischer Schalter nach einem der Ansprüche 1 bis 11, **dadurch gekennzeichnet, daß** zwischen dem ersten Betätigungsglied (2) und dem zweiten Betätigungsglied (3) ein Trennring (5) angeordnet ist, der ortsfest mit dem Gehäuse (1) in Verbindung steht.

13. Elektrischer Schalter nach einem der Ansprüche 1 bis 12, **dadurch gekennzeichnet, daß** ortsfest am Gehäuse (1) ein Aufnahmekörper (4) angebracht ist, der die beiden Betätigungsglieder (2,3) drehbeweglich und den Trennring (5) ortsfest aufnimmt

## Claims

1. Electrical switch with an enclosure which features mechanical functional elements and electrical pieces influenced by these and which supports a first operating element which can be brought into several switch positions and rotated around the enclosure longitudinal axis, and a second operating element which can likewise be brought into several switch settings and can also be rotated around the enclosure longitudinal axis, with the two operating elements functionally assigned to each other in such a way that, upon adjusting the first operating element, the second operating element is automatically transferred from at least one of its switch positions into another switch position as a result of cooperating means and that the adjustment possibilities of the second operating element are released or blocked by cooperating means in dependence on the switch positions of the first operating element,
**characterised by** the fact that a first and a second functional shoulder (25,28) are moulded in one piece onto the first operating element (2), each of which is held in a moveable manner in an arc-shaped guide track (31,32) provided in the enclosure (1) that partially encompasses the enclosure longitudinal axis (7), that the first functional shoulder (25) can be brought into effective contact with a driver cam (29) moulded onto the second operating element (3), and that a spring-operated, radially displaceable blocking member (17) is mounted on the enclosure (1) which comes into effective contact with at least one blocking cam (23) moulded onto the second operating element (3) and which undergoes a radial displacement through the second functional shoulder (28) so that the adjustment options of the second operating element (3) are either blocked or released.

2. Electrical switch according to Claim 1, **characterised by** the fact that the blocking member (17) is designed as a retaining pawl which is supported in a rotational manner on the enclosure (1) and features a blocking profile (33) on its surface facing the enclosure longitudinal axis (7) that comes into effective contact with the blocking cam (23) and an actuating surface (26) that comes into effective contact with the second functional shoulder (28).

3. Electrical switch according to Claim 1, **characterised by** the fact that the blocking member (17) designed as a retaining pawl is moulded onto the enclosure (1) in one piece and the bearing point of the retaining pawl is designed as a film hinge.

4. Electrical switch according to any of Claims 1 to 3, **characterised by** the fact that a spring element (34) is moulded onto the blocking member (17) in one piece and generates the spring effect.

5. Electrical switch according to any of Claims 1 to 3, **characterised by** the fact that a separate spring element (34) is arranged between the blocking member (17) and the enclosure (1) and generates the spring effect.

6. Electrical switch according to Claim 5, **characterised by** the fact that the separate spring element (34) is designed as a helical compression spring.

7. Electrical switch according to Claim 1, **characterised by** the fact that the blocking member (17) is designed as a leaf spring made of metal which generates the spring effect itself and which is located with its one end on the enclosure (1) and comes into effective contact with the blocking cam (23) and with the second functional shoulder (28) with its other end.

8. Electrical switch according to Claim 7, **characterised by** the fact that the blocking member (17) designed as a leaf spring features two legs (19,20) and that the one leg (19) is fixed in a form-fit manner in a location recess (16) of the enclosure (1) and that the other leg (20) is bent at an angle of approximately 80° towards the enclosure longitudinal axis (7) from the extension level of the one leg (19), and that the other leg (20) features a blocking window (24) which comes into effective contact with the blocking cam (23) and an actuating surface (26) representing an edge of the blocking window (24) that comes into effective contact with the second functional shoulder (28).

9. Electrical switch according to any of Claims 1 to 8, **characterised by** the fact that the each of the inner surfaces of both the first and the second operating element (2,3) concentrically encompassing the enclosure longitudinal axis (7) features at least one indexing curve (8,12) in which a spring-loaded indexing element (10,13) held on the enclosure (1) in a slidable manner engages for the purpose of ensuring the various switch positions or switch settings, respectively.

10. Electrical switch according to any of Claims 1 to 9, **characterised by** the fact that the electrical switch is a component of an operator's communication unit arranged in a motor vehicle.

11. Electrical switch according to Claim 10, **characterised by** the fact that the operator's communication unit is designed as a steering column switch and the electrical switch is arranged on the free end section of the actuating lever.

12. Electrical switch according to any of Claims 1 to 11, **characterised by** the fact that a dividing ring (5) which is arranged between the first operating element (2) and the second operating element (3) is linked to the enclosure (1) in a permanently installed manner.

13. Electrical switch according to any of Claims 1 to 12, **characterised by** the fact that a receptacle (4) is mounted on the enclosure (1) in a permanently installed manner which accommodates the two operating elements (2,3) in a rotational manner and the dividing ring (5) in a stationary manner.

## Revendications

1. Commutateur électrique avec un boîtier présentant des éléments fonctionnels mécaniques et des éléments de contact influencés par ceux-ci, boîtier auquel un premier organe d'actionnement, qui, pouvant pivoter autour de l'axe longitudinal dudit boîtier, peut être amené dans plusieurs positions de commutation, et un deuxième organe d'actionnement, qui, pouvant également tourner autour de l'axe longitudinal dudit boîtier, peut être aussi amené dans plusieurs positions de commutation, sont montés, les deux organes d'actionnement étant disposés fonctionnellement par rapport l'un à l'autre de sorte que le deuxième organe d'actionnement, lors du déplacement du premier organe d'actionnement, puisse passer automatiquement d'au moins l'une de ses positions de commutation à une autre position de commutation par l'intermédiaire d'auxiliaires de coopération et que les possibilités d'ajustage du deuxième organe d'actionnement puissent être libérées ou bloquées, **caractérisé en ce que** le premier organe d'actionnement (2) est équipé d'une première et une deuxième saillies fonctionnelles (25, 28) qui, formées d'une pièce à partir de lui, sont maintenues, mobiles, dans une voie de guidage (31, 32) en forme d'arc de cercle qui, entourant partiellement l'axe longitudinal (7) du boîtier sont prévues dans ledit boîtier (1), que la première saillie fonctionnelle (25) peut être mise en prise avec une came d'entraînement (29) formée sur le deuxième organe d'actionnement (3), et qu'un organe de blocage (17), qui, soumis à l'effet d'un ressort, peut dévier dans le sens radial et entrer en prise avec au moins une came de blocage (23) formée au deuxième organe d'actionnement (3), est monté audit boîtier (1), ledit organe de blocage (17) étant dévié dans le sens radial par la deuxième saillie fonctionnelle (28) de sorte que les possibilités de réglage du deuxième organe d'actionnement (3) se trouvent bloquées ou libérées.

2. Commutateur électrique selon la revendication 1, **caractérisé en ce que** l'organe de blocage (17) est conçu en tant que clenche d'arrêt montée, mobile en rotation, au boîtier (1) et présentant sur sa surface orientée vers l'axe longitudinal (7) dudit boîtier un profilé d'arrêt (33), qui coopère avec la came de blocage (23), et une surface d'actionnement (26) qui entre en prise avec la deuxième saillie fonctionnelle (28),

3. Commutateur électrique selon la revendication 2, **caractérisé en ce que** l'organe de blocage (17) conçu en tant que clenche d'arrêt est formé d'une pièce au boîtier (1) et l'auxiliaire de montage de ladite clenche d'arrêt est conçu en tant que charnière pelliculaire.

4. Commutateur électrique selon l'une des revendications 1 à 3, **caractérisé en ce que** l'organe de blocage (17) est équipé d'un élément élastique (34) qui, formé d'une pièce à partir de lui, génère l'effet de ressort.

5. Commutateur électrique selon l'une des revendications 1 à 3, **caractérisé en ce qu'**un élément élastique séparé (34), qui génère la force de ressort, est disposé entre l'organe de blocage (17) et le boîtier (1 ).

6. Commutateur électrique selon la revendication 5, **caractérisé en ce que** l'élément élastique séparé (34) est conçu en tant que ressort cylindrique de compression.

7. Commutateur électrique selon la revendication 1, **caractérisé en ce que** l'organe de blocage (17) est conçu en tant que ressort à lames réalisé en métal qui, d'une part, fixé au boîtier (1) et, d'autre part, coopérant avec la came de blocage (23) et avec la deuxième saillie fonctionnelle (28), génère lui-même l'effet de ressort.

8. Commutateur électrique selon la revendication 7, **caractérisé en ce que** l'organe de blocage (17), conçu en tant que ressort à lames, présente deux branches (19, 20) et que l'une desdites branches (19) est fixée mécaniquement en engagement géométrique dans une poche de réception (16) du boîtier (1 ) et que l'autre branche (20) est coudée sur un angle d'environ 80° en direction de l'axe longitudinal (7) du boîtier, à partir du plan d'orientation de la première branche (19) et que ladite autre branche (20) présente une fenêtre de blocage (24), qui coopère avec la came de blocage (23), ainsi qu'une surface d'actionnement (26), formant un bord de fenêtre de blocage, qui coopère avec la deuxième saillie fonctionnelle (28).

9. Commutateur électrique selon l'une des revendications 1 à 8, **caractérisé en ce que** la surface intérieure du premier ainsi que celle du deuxième organe d'actionnement (2, 3), qui entourent concentriquement l'axe longitudinal (7) du boîtier, présentent chacune au moins une courbe de verrouillage (8, 12) dans laquelle un élément d'arrêt (10, 13), qui, commandé par ressort, est maintenu, ajustable, au boîtier (1), s'enclenche pour verrouiller de manière fiable les différentes positions de commutation.

10. Commutateur électrique selon l'une des revendications 1 à 9, **caractérisé en ce que** le commutateur électrique est une pièce composante d'une unité de commande installée dans un véhicule automobile.

11. Commutateur électrique selon la revendication 10, **caractérisé en ce que** l'unité de commande est conçue en tant que commutateur de colonne de direction et que le commutateur électrique est disposé dans le secteur de l'extrémité libre du levier d'actionnement.

12. Commutateur électrique selon l'une des revendications 1 à 11, **caractérisé en ce qu'**un anneau de séparation (5) est disposé entre le premier organe d'actionnement (2) et le deuxième organe d'actionnement (3) et est relié fixement au boîtier (1 ).

13. Commutateur électrique selon l'une des revendications 1 à 12, **caractérisé en ce qu'**un organe de réception (4), fixé au boîtier (1 ), accueille les deux organes d'actionnement (2, 3) mobiles en rotation et l'anneau de séparation (5) fixe.
